# EUROPEAN PATENT APPLICATION

(11) **EP 3 081 493 A1**
(43) Date of publication of application: **19.10.2016**
(21) Application number: 16163868.9
(22) Date of filing: 05.04.2016
(51) Int. Cl.: B64D 11/06, B60N 2/56

(54) **HEATING SYSTEM FOR VEHICLE SEATS**

(30) Priority: 13.04.2015 IT UB20153485 U
(71) Applicant: Aviointeriors S.p.A., 80133 Napoli (NA) (IT)
(72) Inventor: VENERUSO, Alberto, 80133 NAPOLI (NA) (IT)
(74) Representative: Tiburzi, Andrea

(57) **Abstract**

This invention relates to a heating system for vehicle seats comprising a heating device (2) having an electrically conductive wire (3), a fire-retardant foam (4) incorporating the electrically conductive wire (3) and a fire-retardant fabric (5) positioned around the fire-retardant foam (4). The heating system also comprises a thermo-regulating device (6) for adjusting the temperature of the electrically conductive wire (3), the thermo-regulating device (6) being electrically connectable to an electricity source and to the electrically conductive wire (3), in such a way as to allow the adjustment of the intensity of the current passing through the electrically conductive wire (3) and therefore the adjustment of the temperature of the electrically conductive wire (3).

## Description

This invention relates to a heating system for vehicle seats.

The heating system according to this invention can be advantageously applied in the seats for installation inside aircraft, but can be conveniently mounted also in seats for other types of installation.

The description below relates to a heating system installed in a seat for an aircraft, but it is quite apparent how the same should not be considered limited to this specific use.

There are various prior art systems for heating seats, which have, however, many drawbacks and disadvantages, linked mainly to the poor comfort for the user and the lack of total safety in their use, which could lead to possible risks of flammability of the materials from which the seat is made on which the heating system is applied.

In light of the above, the aim of this invention is therefore to provide a heating system for vehicle seats which is able to provide high levels of safety for the user.

Another aim of this invention is to provide a heating system for vehicle seats which guarantees a high level of seating comfort for the user.

A further aim of this invention is to provide a heating system for vehicle seats which is economical as a function of the results achieved with it in practice.

This invention therefore specifically relates to a heating system for vehicle seats, comprising a heating device having an electrically conductive wire, a fire-retardant foam incorporating the electrically conductive wire and a fire-retardant fabric positioned around the fire-retardant foam, and a thermo-regulating device for adjusting the temperature of the electrically conductive wire, the thermo-regulating device being electrically connectable to an electricity source and to the electrically conductive wire, in such a way as to allow the adjustment of the intensity of the current passing through the electrically conductive wire and therefore the adjustment of the temperature of the electrically conductive wire.

Preferably, according to the invention, the electrically conductive wire may substantially have the shape of a coil.

Advantageously, according to the invention, the electrically conductive wire may substantially have the shape of a double "U".

Further, according to the invention, the fire-retardant fabric may be formed by a first piece of fabric and a second piece of fabric sown together at respective perimeter edges.

Moreover, according to the invention, the thermo-regulating device may comprise a selector element, which can be operated manually, for adjusting the passage of electric current through the thermo-regulating device.

This invention also relates to a vehicle seat comprising a seat, a backrest and a heating system of the type indicated above, wherein the heating device is located in the seat or in the backrest.

Preferably, according to this invention, the seat may have a pocket provided in the seat or in the backrest and the heating device may be positioned in the pocket.

The present invention is now described, by way of example and without limiting the scope of the invention, with reference to the accompanying drawings which illustrate preferred embodiments of it, in which:
Figure 1 shows a heating system for vehicle seats according to a first embodiment of this invention;
Figure 2 shows in detail a component of the system illustrated in Figure 1;
Figure 3 shows the system of Figure 1 located in a first approximate position of a seat for vehicles;
Figure 4 shows the system of Figure 1 located in a second approximate position of a seat for vehicles; and
Figure 5 shows a heating system for vehicle seats according to a second embodiment of this invention.

The similar parts in the various drawings are labelled with the same reference numerals.

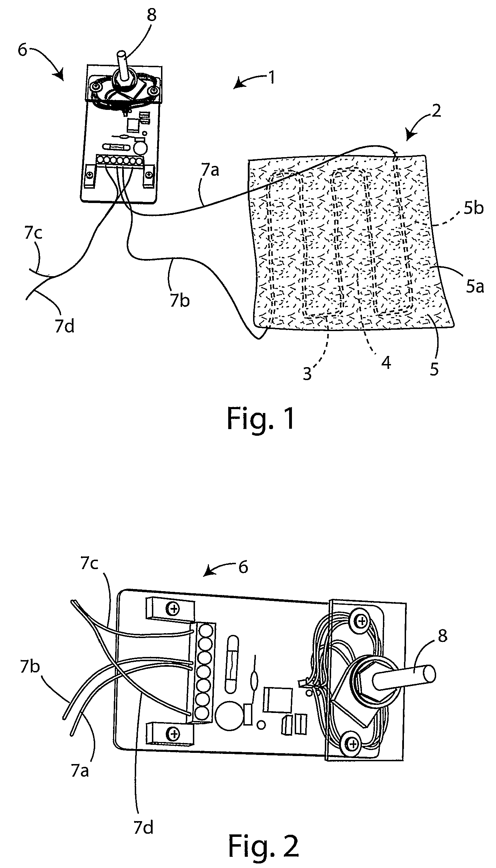

With reference to Figures 1 to 4, the numeral 1 indicates a heating system for vehicle seats according to a first embodiment of this invention.

The above-mentioned system 1 comprises, in particular, a heating device 2 formed by a wire 3 in the form of a coil, made of metal or conductive material.

The wire 3 is incorporated completely in a semi-rigid fire-retardant foam 4, which is in turn contained in a outer fire-retardant fabric 5, in such a way that the foam 4 is interposed between the wire 3 and the outer fabric 5.

More specifically, the above-mentioned outer fabric 5 is formed by a first piece of fabric 5a and by a second piece of fabric 5b, having substantially the same dimensions as an A4 sheet, positioned opposite each other and glued together at respective perimeter edges.

The system 1 also comprises a thermo-regulating device 6 for filtering the electric current to the wire 3.

The thermo-regulating device 6 is connected to the wire 3 by a first electrical cable 7a and a second electrical cable 7b coupled, respectively, to the two ends of the wire 3.

The thermo-regulating device 6 is also connected to an electricity supply source - not shown in the accompanying drawings - by means of a third electrical cable 7c and a fourth electrical cable 7d.

The ends of the third electrical cable 7c and the fourth electrical cable 7d can be provided with respective electrical connectors, designed to allow the connection with the electrical sockets provided in the aircraft in which the seats are installed.

The thermo-regulating device 6 is provided with a selector 8 for adjusting the current passing through it.

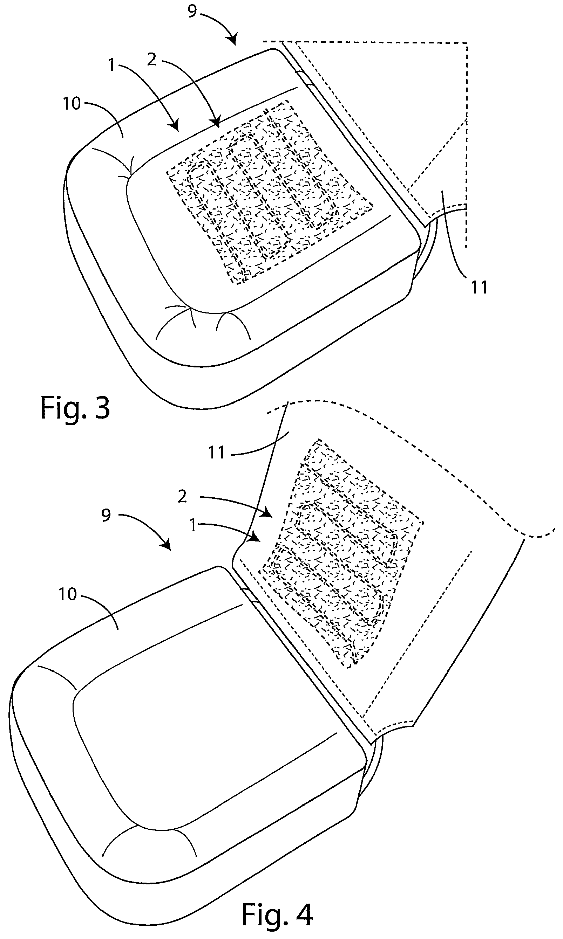

As shown in Figures 3 and 4, the system 1 according to this invention may be conveniently used for heating a seat 9 equipped with a respective seat 10 and a respective backrest 11, positioning the heating device 2 inside the seat 10 (ref. Fig. 3) or the backrest 11 (ref. Fig. 4) at a distance from the relative outer covering so that when the wire 3 heats up, the heat can pass from the wire 3 to the passenger sitting on the seat 9.

More specifically, the heating device 2 may be advantageously housed inside a special pocket - not shown - provided in the seat 10 or in the backrest 11, in such a way as to facilitate the withdrawal of the seat if necessary.

In this respect, it should be noted that this invention also comprises - even though not explicitly shown in the accompanying drawings - the placing of two heating units positioned, respectively, in the seat 10 and in the backrest 11 of the seat 9 to further increase the sensation of comfort for the passenger.

The thermo-regulating device 6 is, on the other hand, mounted in a zone which can be easily reached by the passenger, in such a way that the relative selector 8 can be operated manually by the passenger, who, by using the selector 8, can adjust the temperature of the wire 3.

In effect, the passage of the electrical current through the wire 3 heats the latter by the Joule's effect.

Therefore, varying the position of the selector 8 of the thermo-regulating device 6 determines an increase or reduction in the intensity of current in the wire 3, and therefore a greater or lesser heating of the latter.

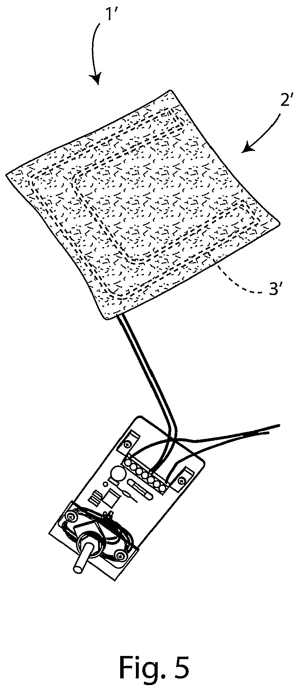

Figure 5 shows a heating system for vehicle seats 1' according to a second embodiment of this invention.

The system 1' is identical to the system 1 described above with the exception of the shape of the wire 3' of the heating device 2', which in this case is substantially double U-shaped.

Obviously, also in this case the heating device 2' may be located in the seat or in the backrest of the seat, or even in both.

Summing up, it should be noted that this invention contemplates both the case of a seat already incorporating a heating system for vehicle seats of the type described above, and the application of the heating system in an existing seat, as a retrofit element.

As may be inferred from the above description, the heating system according to this invention allows the achievement, on the one hand, of total safety for the user in terms of possible risks of flammability of the materials of the seat, and, on the other hand, a high degree of comfort for the user, as the user can perceive a sensation of heat uniformly distributed on the seating area of the seat.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. Heating system for vehicle seats, comprising:
a heating device (2) having an electrically conductive wire (3), a fire-retardant foam (4) incorporating said electrically conductive wire (3) and a fire-retardant fabric (5) positioned around said fire-retardant foam (4), and
a thermo-regulating device (6) for adjusting the temperature of said electrically conductive wire (3), said thermo-regulating device (6) being electrically connectable to an electricity source and to said electrically conductive wire (3), in such a way as to allow the adjustment of the intensity of the current passing through said electrically conductive wire (3) and therefore the adjustment of the temperature of said electrically conductive wire (3).

2. Heating system according to claim 1, wherein said electrically conductive wire (3) is substantially coil-shaped.

3. Heating system according to claim 1, wherein said electrically conductive wire (3) is substantially double U-shaped.

4. Heating system according to any one of the preceding claims, wherein said fire-retardant fabric (5) is formed by a first piece of fabric (5a) and a second piece of fabric (5b) sown together at respective perimeter edges.

5. Heating system according to any one of the preceding claims, wherein said thermo-regulating device (6) comprises a selector element (8), which can be operated manually, for adjusting the passage of electric current through said thermo-regulating device (6).

6. Vehicle seat (9) comprising a seat (10), a backrest (11) and a heating system (1) according to any one of the preceding claims, wherein said heating device (2) is located in said seat (10) or in said backrest (11).

7. Vehicle seat (9) according to claim 6, wherein said seat (9) has a pocket provided in said seat (10) or in said backrest (11) and wherein said heating device (2) is positioned in said pocket.
